Europäisches Patentamt

European Patent Office

Office européen des brevets

(19)

(11) Numéro de publication : **0 148 055 B1**

(12) **FASCICULE DE BREVET EUROPÉEN**

(45) Date de publication du fascicule du brevet :
**15.03.89**

(51) Int. Cl.⁴ : **H 04 N 5/217**

(21) Numéro de dépôt : **84402491.9**

(22) Date de dépôt : **05.12.84**

(54) Dispositif de détection à diodes photovoltaiques.

(30) Priorité : **08.12.83 FR 8319649**

(43) Date de publication de la demande :
**10.07.85 Bulletin 85/28**

(45) Mention de la délivrance du brevet :
**15.03.89 Bulletin 89/11**

(84) Etats contractants désignés :
**DE GB IT**

(56) Documents cités :
**WO—A—82/031 46**
**IBM TECHNICAL DISCLOSURE BULLETIN, vol. 23, no. 12, mai 1981, pages 5288-5289, New York, US; W.J. CRAIG: "Redundancy for document scanners"**
**INSTITUTE OF ELECTRICAL AND ELECTRONIC ENGINEERS, NEREM RECORD, 6-8 novembre 1973, Boston, vol. 15, partie 3: "Infrared", pages 60-69, IEEE, Newton, US; J.J. RICHTER: "Infrared thermal imaging"**
**JOURNAL OF PHYSICS, SCIENTIFIC INSTRUMENTS, vol. 8, no. 5, 1975, pages 337-349, Londres, GB; P.W. FRY: "Silicon photodiode arrays"**

(73) Titulaire : **SOCIETE ANONYME DE TELECOMMUNI- CATIONS**
**41, rue Cantagrel**
**F-75624 Paris Cedex 13 (FR)**

(72) Inventeur : **Besson, Jean Georges**
**41, rue Cantagrel**
**F-75631 Paris Cedex 13 (FR)**
Inventeur : **Royer, Michel**
**41, rue Cantagrel**
**F-75631 Paris Cedex 13 (FR)**
Inventeur : **Salaville, André Auguste**
**41, rue Cantagrel**
**F-75631 Paris Cedex 13 (FR)**
Inventeur : **Sirieix, Michel Benoît**
**41, rue Cantagrel**
**F-75631 Paris Cedex 13 (FR)**

(74) Mandataire : **Bloch, Robert et al**
**6, rue du Faubourg Saint-Honoré**
**F-75008 Paris (FR)**

Jouve, 18, rue St-Denis, 75001 Paris, France

## Description

La présente invention concerne un dispositif de détection comprenant une barrette de diodes photovoltaïques.

De nombreux systèmes de détection comme par exemple ceux du type CCD, à couplage de charges (charge-coupled device) à balayage parallèle, comprennent un module de base, composé d'une barrette d'éléments détecteurs, par exemple cent vingt huit diodes photovoltaïques en HgCdTe quand la détection s'effectue dans les longueurs d'onde infrarouge.

Le balayage parallèle consiste à faire pivoter un miroir devant la barrette de diodes et, par exemple, un paysage, pour obtenir le même résultat que si chacune des diodes pivotait elle-même et balayait une ligne de ce paysage. Les signaux de sortie des diodes sont multiplexés, avant d'être envoyés sur un circuit de traitement.

Pour qu'il n'y ait aucune ligne aveugle dans l'image vidéo, en aval du multiplexeur, il faut donc qu'aucune de ces diodes ne soit défectueuse.

Les barrettes de diodes en question sont obtenues à partir d'une plaquette. Dans le cas d'un cristal semiconducteur HgCdTe, on peut obtenir plusieurs dizaines de ces barrettes par plaquette. Mais le rendement a toujours été mauvais et ce, depuis une dizaine d'années. Ce rendement, c'est-à-dire, le rapport entre le nombre de barrettes sans défaut et le nombre total de barrettes de la plaquette, a toujours été inférieur à 10 %. La perte de matière a donc toujours été considérable. En outre, la sélection des barrettes non défectueuses d'une plaquette s'est toujours faite par tri manuel, doublant ainsi les frais de matière de frais de main-d'oeuvre importants.

Le coût des systèmes de détection évoqués plus haut a donc toujours été très élevé et c'est la réduction de ce coût que vise la présente invention.

On connaît déjà, par le document WO-A-82 03 146, un dispositif de détection comprenant un miroir de balayage et une barrette de diodes photovoltaïques, la barrette étant une barrette défectueuse, celle-ci étant associée à au moins une autre barrette de diodes photovoltaïques défectueuses pour associer les diodes respectives des deux barrettes par paires de diodes dont au moins une n'est pas défectueuse, des moyens de sélection du signal de sortie de cette diode non défectueuse étant prévus pour effectuer ainsi une lecture des diodes.

Toutefois, dans le dispositif de ce document, avec un miroir semi-transparent, deux images différentes sont respectivement formées dans deux plans focaux différents, avec respectivement deux optiques onéreuses à positionner avec précision, ce qui en accroît encore le coût. La puissance optique du signal incident, dans ce dispositif, est divisée par deux ; le signal est donc divisé par deux, alors que le bruit de fond ambiant, lui, ne l'est pas. Il en résulte une dégradation du rapport signal/bruit.

La présente invention vise donc à proposer un dispositif de ce type connu, ne présentant pas les inconvénients ci-dessus.

A cet effet, la présente invention concerne un tel dispositif caractérisé par le fait que les deux barrettes sont adjacentes, leurs diodes respectives sont associées par paires parallèles respectivement aux lignes de balayage, et la lecture des diodes est une lecture serpentine.

A cet effet, l'invention concerne un dispositif de détection comprenant un miroir de balayage et une barrette de diodes photovoltaïques, caractérisé par le fait que la barrette est une barrette défectueuse, que celle-ci est associée à au moins une autre barrette adjacente de diodes photovoltaïques défectueuse, pour associer les diodes respectives des deux barrettes par paires de diodes dont au moins une n'est pas défectueuse, et qu'il comprend des moyens de sélection du signal de sortie de cette diode non défectueuse, pour effectuer ainsi une lecture serpentine des diodes.

Grâce à l'invention, qui permet l'utilisation de barrettes défectueuses, au moins deux qui se compensent mutuellement, le nombre de barrettes utilisables obtenues à partir d'une même plaquette devient considérablement plus élevé, jusqu'à correspondre à un rendement de 95 %, soit plusieurs dizaines de barrettes par plaquette. L'invention va donc permettre de ne plus gâcher près de 90 % de la production. En outre, les deux barrettes du dispositif de l'invention étant associées à un miroir unique, le dispositif ne reçoit qu'un seul et même signal incident dans un seul plan focal d'une optique unique.

Les moyens de sélection du dispositif de l'invention sont destinés à sélectionner l'un ou l'autre des signaux de sortie des deux diodes de chaque paire, donc disposées en ligne, dans le sens du balayage, pour qu'aucune ligne ne soit aveugle. Il s'agit en réalité de moyens de gestion des défauts. Dans une forme de réalisation préférée du dispositif de l'invention, ces moyens de gestion comprennent une mémoire, contenant un programme de gestion, et des moyens de commutation, commandés par la mémoire, pour sélectionner l'un des signaux de sortie, avantageusement multiplexés, des deux barrettes, et éliminer l'autre.

L'invention sera mieux comprise à l'aide de la description suivante d'une forme de réalisation préférée du dispositif de l'invention, en référence aux dessins annexés, sur lesquels :

- la figure 1 représente schématiquement un dispositif de détection de l'art antérieur.

- la figure 2 représente schématiquement le dispositif de détection de l'invention.

- la figure 3 représente le dispositif de détection de l'invention avec ses moyens de gestion des défauts, et

- la figure 4 représente schématiquement un exemple de réalisation de sous-modules de détection raccordés.

On a dit plus haut que l'invention s'appliquait notamment aux systèmes infrarouge du type CCD, bien connu. Il ne s'agit pas ici d'une limitation de l'invention. Qu'il s'agisse d'un circuit CCD ou de tout autre circuit de traitement ou d'analyse des signaux de sortie du dispositif de détection de l'invention, proprement dit, ce circuit ne sera pas décrit, pour être parfaitement connu de l'homme de métier.

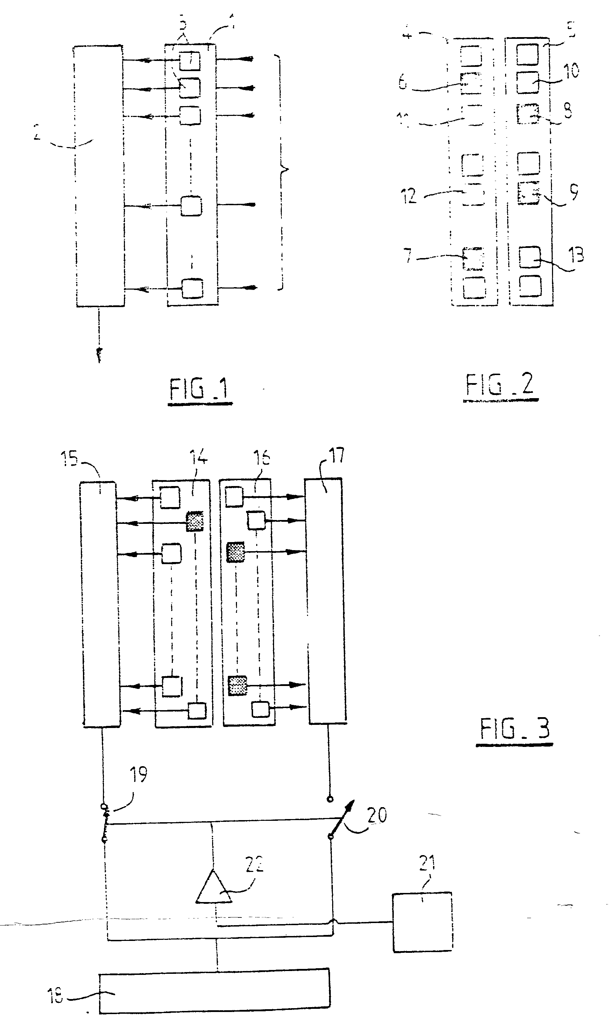

On a représenté sur la figure 1, un dispositif de détection de l'art antérieur, comprenant une barrette de détection 1 et un multiplexeur 2, dont la sortie est donc raccordée à un circuit de traitement non représenté. On n'a pas davantage représenté, en amont du dispositif, le miroir de balayage, par exemple d'un paysage dont l'analyse vidéo est à effectuer.

La barrette 1 comprend une pluralité de diodes photovoltaïques 3, en l'occurrence 128 diodes en HgCdTe, disposées en colonne, et balayant chacune une ligne du paysage. Les signaux de sortie des diodes 3 sont envoyés, de préférence par l'intermédiaire d'amplificateurs non représentés, sur les entrées du multiplexeur 2.

Les diodes 3 sont sans défaut.

On a représenté schématiquement sur la figure 2 le seul dispositif de détection de l'invention. Il comprend deux barrettes 4, 5, similaires à la barrette 1, mais dont certaines des diodes photovoltaïques sont défectueuses. Ainsi, les diodes 6, 7 de la colonne de diodes de la barrette 4 et les diodes 8, 9 de la colonne de diodes de la barrette 5 sont défectueuses. Les diodes des deux barrettes sont respectivement associées par paires parallèles respectivement aux lignes de balayage. Chacune de ces paires comporte au moins une diode non défectueuse. Ainsi, la paire 6, 10 comporte la mauvaise diode 6 de la barrette 4 mais la bonne diode 10 de la barrette 5 ; la paire 11, 8 comporte la bonne diode 11 de la barrette 4, la paire 12, 9, la bonne diode 12 de la barrette 4, la paire 7, 13, la bonne diode 13 de la barrette 5.

A cet endroit, il faut préciser que l'invention n'est pas limitée à l'association de deux barrettes défectueuses et qu'on pourrait tout aussi bien en associer plus de deux. Il faut aussi souligner que si les deux colonnes de diodes du dispositif de l'invention sont généralement disposées sur deux barrettes différentes, il peut arriver que deux colonnes adjacentes d'une même plaquette de départ puissent être utilisées. Dans ce cas, il n'y a réellement qu'un seul support de diodes. Dans ce cas, toujours, les deux colonnes de diodes, formant un même ensemble monolithique, présentent les mêmes caractéristiques optoélectroniques, c'est-à-dire le même rendement optique et la même longueur d'onde. Dans les deux cas, qu'il s'agisse d'une ou de deux barrettes, un seul cryostat suffit.

En réalité, et conformément à la figure 3, la topologie des barrettes est telle que les diodes sont disposées en quinconce, d'une part, sur chacune des barrettes et, d'autre part, d'une barrette à l'autre, pour des raisons de fabrication et d'usinage et afin d'être plus concentrées. Néanmoins, la demanderesse a réussi à disposer sur chaque barrette deux colonnes espacées en largeur de 36 μm, de diodes de 36 μm de largeur et 50 μm de hauteur, et à disposer deux de ces barrettes de manière que leurs colonnes respectives adjacentes ne soient aussi espacées en largeur que de 36 μm, les diodes voisines de deux colonnes adjacentes étant espacées en hauteur de 72 μm.

Les diodes de la barrette 14 de la figure 3 sont connectées au multiplexeur 15, celles de la barrette 16, au multiplexeur 17, les diodes défectueuses étant représentées en noir.

Les deux multiplexeurs sont connectés à un circuit de traitement 18 par l'intermédiaire de deux interrupteurs analogiques 19, 20, respectivement. On notera encore ici que ces deux interrupteurs pourraient être remplacés par un seul commutateur analogique.

Les deux interrupteurs sont commandés par une mémoire 21, par l'intermédiaire d'un amplificateur 22.

La mémoire 21 contient un programme logique de gestion des défauts des barrettes 14, 16, pour sélectionner, pour chaque ligne de balayage, le signal de sortie de l'un ou l'autre des multiplexeurs 15, 17 et donc ne pas tenir compte de celui de l'autre.

La mémoire 21 peut être une mémoire PROM (programmable read only memory), contenant un programme préparé au moment du test des diodes des plaquettes, ou une mémoire EEPROM (electrically erasable PROM), soit une mémoire PROM électriquement effaçable, dont le programme peut être modifié au cours de l'utilisation du dispositif, pour le cas où d'autres diodes deviendraient défectueuses, la modification pouvant intervenir soit à l'occasion d'une opération de maintenance, soit automatiquement à l'aide d'un contrôleur.

En définitive, le dispositif de détection qui vient d'être décrit comporte une matrice multidimensionnelle de diodes à lecture programmée. Il s'agit d'une lecture serpentine des colonnes de diodes du dispositif, pour ne prendre en compte que les bonnes diodes.

Afin de tenir compte de la commutation d'une barrette à l'autre, et du décalage spatial des barrettes associées, on disposera avantageusement, par exemple à l'entrée du multiplexeur 17, une ligne à retard pour la remise en phase des signaux des deux multiplexeurs.

A partir de la solution de l'invention qui vient d'être décrite, il est encore possible d'aller au-delà dans l'amélioration du rendement de production, c'est-à-dire dans l'augmentation de la part utilisable de la production des plaquettes de départ.

Il est en effet possible d'isoler des sous-modules de détection comprenant déjà au moins deux portions de barrettes associées dont les diodes respectives sont associées par paires dont au moins une n'est pas défectueuse, et de les raccorder en les mettant bout-à-bout, sous réserve que ce raccordement soit réalisé selon une ligne, ou mieux une voie, oblique et que par conséquent ces sous-modules aient été préalablement ainsi découpés en oblique.

On notera que si au départ, et avant leur découpage, ces sous-modules peuvent parfaitement ne comporter que des diodes non défectueuses, une fois raccordés, ils comportent à nouveau, de part et d'autre des voies de raccordement obliques des paires de diodes dont au moins une est défectueuse, pour l'être devenue au cours de l'opération de découpage.

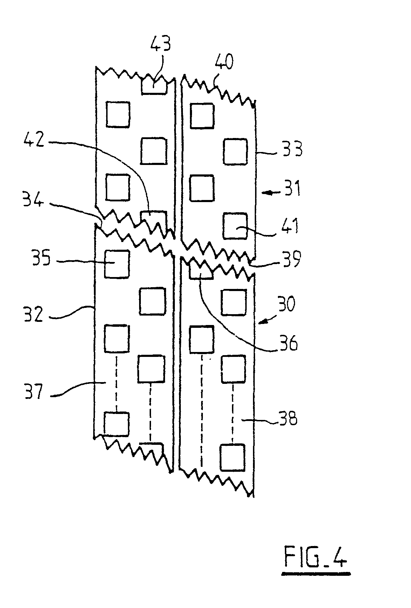

La figure 4 représente un exemple de réalisation de sous-modules raccordés.

A partir d'une double barrette de diodes appariées en lignes, ou même de deux ou plusieurs de ces doubles barrettes, on a découpé un premier sous-module 30, un second sous-module 31 et d'autres non représentés.

Le découpage a été réalisé en biais, c'est-à-dire non perpendiculairement aux parois latérales 32, 33 de la double barrette, ou suivant des voies inclinées sur les lignes de diodes appariées.

Le module 30 a été découpé suivant la ligne irrégulière 34, ayant préservé la diode 35 de la première barrette 37 mais non la diode 36, disposée sur la même ligne, de la deuxième barrette 38. Le module 31 a été découpé suivant les lignes irrégulières 39, 40, la diode 41 de la barrette 38 ayant été préservée mais non les diodes 42 et 43 de la barrette 37. L'irrégularité des lignes 34, 39, 40 a été provoquée par le découpage.

La mise bout-à-bout, par des moyens classiques, comme la colle, des sous-modules 30 et 31 provoque une discontinuité le long des lignes 34 et 39, en raison de leur irrégularité, mais cette discontinuité n'est pas dommageable pour la détection, puisque les diodes restent appariées en lignes, avec au moins une bonne diode par ligne de balayage, grâce à la disposition oblique du raccordement. Ainsi, sur la ligne de diodes 35, 36, la détection s'effectuera par la diode 35 de la barrette 37, sur la ligne de diodes 42, 41, par la diode 41 de la barrette 38.

Si le découpage avait été réalisé perpendiculairement aux parois 32, 33, la double-barrette reconstituée aurait comporté des lignes de diodes aveugles.

Grâce à cette disposition, il est donc possible, non seulement de découper dans des doubles barrettes, avec une ou deux plaquettes de départ, des sous-modules pour utiliser au maximum la production, mais encore de réaliser des doubles barrettes de longueur plus importante qu'il ne serait sinon permis d'obtenir à partir des plaquettes de départ de dimensions déterminées.

Dans le cas où les diodes sont au départ espacées d'une distance importante, par exemple de l'ordre de 200 μm, on procèdera à un découpage des sous-modules par des moyens mécaniques, par exemple par sciage.

Dans le cas où les diodes sont très faiblement espacées à la surface des barrettes, d'une part, et que l'épaisseur de la ou des plaquettes de départ est faible, par exemple inférieure à 100 μm, d'autre part, on pourra procéder par gravure chimique ou ionique.

Bien entendu, la reconstitution de barrettes « composites » est également possible lorsque les diodes sont disposées en quinconce.

## Revendications

1. Dispositif de détection comprenant un miroir de balayage et une barrette de diodes photovoltaïques, la barrette étant une barrette défectueuse (4 ; 14 ; 37), celle-ci étant associée à au moins une autre barrette de diodes photovoltaïques défectueuses (5 ; 16 ; 38) pour associer les diodes respectives des deux barrettes par paires de diodes (6, 10 ; 11, 8 ; 12, 9 ; 7, 13 ; 35, 36 ; 41, 42) dont au moins une (10 ; 11 ; 12 ; 13 ; 35 ; 41) n'est pas défectueuse, des moyens (19-22) de sélection du signal de sortie de cette diode non défectueuse étant prévus pour effectuer ainsi une lecture des diodes, dispositif caractérisé par le fait que les deux barrettes (4, 5 ; 14, 16 ; 37, 38) sont adjacentes, leurs diodes respectives sont associées par paires parallèles respectivement aux lignes de balayage et la lecture des diodes est une lecture serpentine.

2. Dispositif selon la revendication 1, dans lequel les moyens de sélection comprennent une mémoire (21), contenant un programme de gestion, et des moyens de commutation (19, 20) commandés par la mémoire (21), pour sélectionner l'un des signaux de sortie des deux barrettes (14, 16 ; 37, 38) et éliminer l'autre.

3. Dispositif selon la revendication 2, dans lequel les diodes de chaque barrette (14, 16) sont connectées aux entrées d'un multiplexeur (15, 17).

4. Dispositif selon l'une des revendications 2 et 3, dans lequel la mémoire (21) est une mémoire PROM.

5. Dispositif selon l'une des revendications 2 et 3, dans lequel la mémoire (21) est une mémoire EEPROM.

6. Dispositif selon l'une des revendications 2 à 5, dans lequel les moyens de commutation comprennent deux interrupteurs analogiques (19, 20).

## Claims

1. Detection device comprising a scanning mirror and an array of photovoltaic diodes, the array being a defective array (4 ; 14 ; 37), the latter being associated with at least another array of defective photovoltaic diodes (5 ; 16 ; 38) in order to associate the respective diodes of the two arrays in pairs of diodes (6, 10 ; 11, 8 ; 12, 9 ; 7, 13 ; 35, 36 ; 41, 42) of which at least one (10 ; 11 ; 12 ; 13 ; 35 ; 41) is not defective, means (19-22) for selecting the output signal of this non-defective diode being provided so as to thus proceed to a readout of the diodes, device characterized in that the two arrays (4, 5 ; 14, 16 ; 37, 38) are adjacent, their respective diodes are associated in pairs parallel to the scanning lines respectively and the readout of the diodes is a serpentine readout.

2. Device as claimed in claim 1, wherein the selection means comprise a memory (21) containing a management program, and switching means (19, 20) controlled by the memory (21) for selecting one of the output signals of the two arrays (14, 16 ; 37, 38) and for eliminating the other.

3. Device as claimed in claim 2, wherein the diodes of each array (14, 16) are connected to the inputs of a multiplexer (15, 17).

4. Device as claimed in one of claims 2 and 3, wherein the memory (21) is a PROM memory.

5. Device as claimed in one of claims 2 and 3, wherein the memory (21) is an EEPROM memory.

6. Device as claimed in one of claims 2 to 5, wherein the switching means comprise two analog switches (19, 20).


**Patentansprüche**

1. Detektor vorrichtung, umfassend einen Abtastspiegel und ein Stäbchen von photovoltaischen Dioden, wobei das Stäbchen ein fehlerhaftes Stäbchen (4 ; 14 ; 37) ist, das mindestens einen anderen Stäbchen von fehlerhaften photovoltaischen Dioden (5 ; 16 ; 38) zugeordnet ist, um die jeweiligen Dioden der beiden Stäbchen in Diodenpaaren (6, 10 ; 11, 8 ; 12, 9 ; 7, 13 ; 35, 36 ; 41, 42) zuzuordnen, von denen mindestens eine (10 ; 11 ; 12 ; 13 ; 35 ; 41) nicht fehlerhaft ist, wobei eine Wähleinrichtung (19-22) für das Ausgangssignal dieser nicht fehlerhaften Diode vorgesehen ist, um somit eine Ablesung der Dioden durchzuführen, wobei die Vorrichtung dadurch gekennzeichnet ist, daß die beiden Stäbchen nebeneinander liegen, wobei ihre jeweiligen Dioden in Paaren zugeordnet sind, die jeweils parallel zu den Abtastzeilen sind, und die Ablesung der Dioden eine schlangenförmige Ablesung ist.

2. Vorrichtung nach Anspruch 1, bei der die Wähleinrichtung einen Speicher (21), der ein Steuerprogrammn enthält, und eine von dem Speicher (21) gesteuerte Umschalteinrichtung (19, 20) aufweist, um eines der Ausgangssignale der beiden Stäbchen (14, 16 ; 37, 38) zu wählen und das andere eliminieren.

3. Vorrichtung nach Anspruch 2, bei der die Dioden jedes Stäbchen (14, 16) an die Eingänge eines Multiplexers (15, 17) angeschlossen sind.

4. Vorrichtung nach einem der Ansprüche 2 und 3, bei der der Speicher (21) ein PROM-Speicher ist.

5. Vorrichtung nach einem der Ansprüche 2 und 3, bei der der Speicher (21) ein EEPROM-Speicher ist.

6. Vorrichtung nach einem der Ansprüche 2 bis 5, bei der die Umschalteinrichtung zwei analoge Schalter (19, 20) aufweist.

FIG.1

FIG.2

FIG.3

FIG_4